# EUROPEAN PATENT APPLICATION

(11) **EP 3 073 359 A1**
(43) Date of publication of application: **28.09.2016**
(21) Application number: 16160710.6
(22) Date of filing: 16.03.2016
(51) Int. Cl.: G06F 3/044, G02F 1/1362

(54) **TOUCH CIRCUIT WITH STATIC PROTECTION STRUCTURE AND TOUCH PANEL**

(30) Priority: 23.03.2015 CN 201510127724
(71) Applicant: Xiaomi Inc., Beijing 100085 (CN)
(72) Inventor: HAO, Ning, 100085 BEIJING (CN); ZHAO, Qinghui, 100085 BEIJING (CN); WANG, Yanteng, 100085 BEIJING (CN)
(74) Representative: Cougard, Jean-Marie

(57) **Abstract**

Disclosed is a touch circuit having a static protection structure and a touch panel. The touch circuit includes: a signal transmission channel (101) and a ground channel (102); an end of the signal transmission channel (101) is provided with a first tip structure (103) protruding outward and having a needlepoint-shape top end; the ground channel (102) is provided with a second tip structure (104) having a needlepoint-shape top end which is opposite to the needlepoint-shape top end of the first tip structure (103); and the needlepoint-shape top end of the first tip structure (103) on the signal transmission channel (101) is used for aggregating static charges on the signal transmission channel (101), and discharging the aggregated static charges to the second tip structure (104) on the ground channel (102) which is opposite to the first tip structure (103).

## Description

### TECHNICAL FIELD

The present disclosure relates to field of manufacturing electronic equipment, and more particularly, to a touch circuit with a static protection structure, and to a touch panel.

### BACKGROUND

Conventionally, touch panels are mostly made of ITO (Indium Tin Oxide) material. However, the anti-static capacity of the touch panel made of ITO material is relatively weak. Thus, how to prevent the static from damaging the touch panel becomes a burning question.

At present, the solution is to add a static protection device at a connector of the touch panel so as to block the charges to be out of the touch panel.

### SUMMARY

The present disclosure provides a touch circuit comprising a static protection structure and a touch panel. The technical solutions are as below.

According to a first aspect of embodiments of the present disclosure, there is provided a touch circuit comprising a static protection structure, wherein the touch circuit includes: a signal transmission channel and a ground channel;

wherein an end of the signal transmission channel is provided with a first tip structure protruding outward and having a needlepoint-shape top end;

wherein the ground channel is provided with a second tip structure having a needlepoint-shape top end which is opposite to the needlepoint-shape top end of the first tip structure; and

the needlepoint-shape top end of the first tip structure on the signal transmission channel is used for aggregating static charges on the signal transmission channel, and discharging the aggregated static charges to the second tip structure on the ground channel which is opposite to the first tip structure.

In one embodiment, the needlepoint-shape top end on the second tip structure is used for receiving the static charges discharged by the needlepoint-shape top end of the first tip structure, and guiding the static charges to the ground channel.

In one embodiment, a distance between the needlepoint-shape top end on the first tip structure and the needlepoint-shape top end on the second tip structure is smaller than a predetermined distance threshold.

In one embodiment, the ground channel is used for providing a turning loop for the static charges received by the second tip structure.

In one embodiment, the signal transmission channel is connected with a touch chip, and the signal transmission channel is used for receiving a capacitance value generated on a touch panel and carrying a driving signal of the touch chip.

In one embodiment, the first tip structure is obtained by etching if the signal transmission channel is formed by etching; and

the second tip structure is obtained by etching if the ground channel is formed by etching.

According to a second aspect of embodiments of the present disclosure, there is provided a touch panel including the touch circuit described according to the first aspect of the embodiments of the present disclosure.

The technical solutions provided by the embodiments of the present disclosure may include the following advantageous effects:

the static charges are aggregated at the first tip structure at the end of the signal transmission channel, and the aggregated static charges are discharged to the second tip structure on the ground channel opposite to the first tip structure; in this way, the static charges are discharged to the ground channel to eliminate the damage of the static to the touch circuit, thereby solving the problem that adding a static protection device can only block the static charges, but still damages the touch circuit when the aggregated static charges are too many, and achieving the effect of improving the anti-static performance of the touch circuit.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.

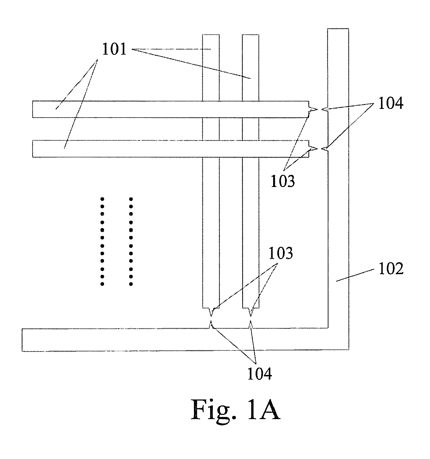

Fig. 1A is a structural schematic diagram showing a touch circuit comprising a static protection structure, according to an exemplary embodiment.

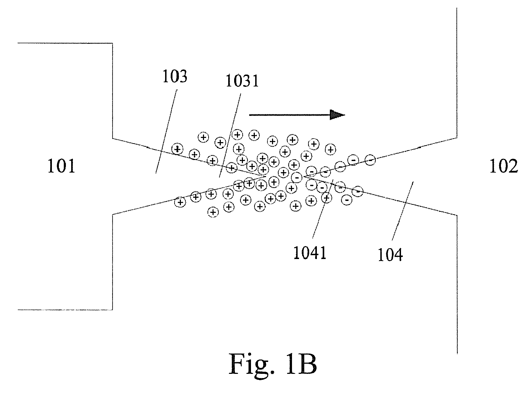

Fig. 1B is schematic diagram showing that static charges at a first tip structure are discharged to a second tip structure, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

Fig. 1A is a structural schematic diagram showing a touch circuit comprising a static protection structure, according to an exemplary embodiment. As shown in Fig. 1A, the touch circuit includes: a signal transmission channel 101 and a ground channel 102.

An end of the signal transmission channel 101 is provided with a first tip structure 103 protruding outward and having a needlepoint-shape top end.

The ground channel 102 is provided with a second tip structure 104 having a needlepoint-shape top end which is positioned opposite to the needlepoint-shape top end of the first tip structure 103. The needlepoint-shape top end of the first tip structure 103 and needlepoint-shape top end of the second tip structure 104 are arranged so as to be spaced apart from each other (i.e. they do not contact each other).

Herein, the first tip structure 103 and the second tip structure 104 may be a triangle structure or other structures having a needlepoint-shape top end. The first tip structure 103 is located at the end of the signal transmission channel 101, the second tip structure 104 is located at the ground channel 102, and the needlepoint-shape top end of the first tip structure 103 and the needlepoint-shape top end of the second tip structure 104 are opposite to each other, and constitute a tip group used for discharging static charges. The tip group is provided between each signal transmission channel 101 and ground channel 102. In a particular example, the number of the first tip structure 103 and the number of the second tip structure 104 in the touch circuit are equal.

In practical application, the signal transmission channel 101 may be one, two or more than two, and the ground channel 102 may be one, two, or more than two. The number of the signal transmission channel 101 and the number of the ground channel 102 are not limited in the embodiments.

In one group of the opposite first tip structure 103 and second tip structure 104, the needlepoint-shape top end of the first tip structure 103 directs to the needlepoint-shape top end of the second tip structure 104.

Alternatively, the first tip structure 103 may also be located at other positions on the signal transmission channel 101, which is not limited by the present embodiment.

It can be known from a formula of potential distribution of static field, a charge density in the static field is in an inverse proportion to a curvature radius R, and under different curvatures, the charges are generally distributed at a position having a relatively large curvature. That is, according to distribution of static field, under the same condition for a single conductor, the charges tend to be aggregated at a position having a relatively large curvature. Thereby, in a certain circuit channel in the touch circuit, the curvature of the tip structure having a needlepoint shape top end is relatively large, and thus more static charges are aggregated at such tip structure.

In practical application, the first tip structure 103 protruding outward, having a needlepoint shape top end and provided at an end of the signal transmission channel 101 can aggregate the static charges on the signal transmission channel 101; and the second tip structure 104 protruding outward, having a needlepoint shape top end and provided at the ground channel 102 can aggregate the static charges on the ground channel 102. Moreover, since the curvatures of the needlepoint shape top ends of the first tip structure 103 and the second tip structure 104 are the maximum, the static charges will aggregate at the needlepoint shape top ends of the first tip structure 103 and the second tip structure 104.

The needlepoint-shape top end of the first tip structure 103 on the signal transmission channel 101 is used for aggregating static charges on the signal transmission channel 101, and discharging the aggregated static charges to the second tip structure 104 on the ground channel 102 opposite to the first tip structure 103.

The needlepoint-shape top end of the first tip structure 103 on the signal transmission channel 101 is opposite to the needlepoint shape top end of the second tip structure 104 on the ground channel 102. When a certain number of static charges are aggregated at the needlepoint-shape top end of the first tip structure 103, since a potential at the needlepoint-shape top end of the first tip structure 103 is higher than that at the needlepoint shape top end of the second tip structure 104, the static charges aggregated at the needlepoint-shape top end of the first tip structure 103 are discharged to the needlepoint-shape top end of the second tip structure 104.

For instance, Fig. 1B is schematic diagram showing that static charges at a first tip structure are discharged to a second tip structure, according to an exemplary embodiment. As shown in Fig. 1B, after a large number of static charges are aggregated at the needlepoint-shape top end 1031 of the first tip structure 103, since a potential at the needlepoint-shape top end 1031 of the first tip structure 103 is higher than that at the needlepoint shape top end 1041 of the second tip structure 104, the static charges aggregated at the needlepoint-shape top end 1031 of the first tip structure 103 are discharged to the needlepoint-shape top end 1041 of the second tip structure 104.

The needlepoint-shape top end on the second tip structure 104 is used for receiving the static charges discharged by the needlepoint-shape top end of the first tip structure 103, and guiding the static charges to the ground channel 102.

After the needlepoint-shape top end on the second tip structure 104 on the ground channel 102 receives the static charges discharged by the needlepoint-shape top end of the first tip structure 103, a potential at the needlepoint-shape top end of the second tip structure 104 is higher than that at other positions on the ground channel 102, thereby the static charges at the needlepoint-shape top end of the second tip structure 104 will flow to positions having a low potential on the ground channel 102 through the ground channel 102.

A distance (higher than zero) between the needlepoint-shape top end on the first tip structure 103 and the needlepoint-shape top end on the second tip structure 104 is smaller than a predetermined distance threshold.

In order to enable the static charges aggregated at the needlepoint-shape top end of the first tip structure 103 to be discharged to the needlepoint-shape top end of the second tip structure 104 successfully, a distance between the needlepoint-shape top end on the first tip structure 103 and the needlepoint-shape top end on the second tip structure 104 needs to be smaller than a predetermined distance threshold (this distance is however more than zero).

The ground channel 102 is used for providing a turning loop for the static charges received by the second tip structure 104.

When the second tip structure 104 does not receive the static charges discharged by the first tip structure 103, the potential at the second tip structure 104 is substantially equal to those at other positions on the ground channel 102. After the second tip structure 104 receives the static charges discharged by the first tip structure 103, the potential at the second tip structure 104 is higher than those at other positions on the ground channel 102. At this time, the static charges at the second tip structure 104 flow to the positions having a low potential on the ground channel 102 through the ground channel 102.

The signal transmission channel 101 is connected with a touch chip and a touch panel, and the signal transmission channel 101 is used for receiving a capacitance value generated on the touch panel and carrying a driving signal of the touch chip.

Herein, the signal transmission channel 101 may be a capacitance value receiving circuit channel or a driving signal sending circuit channel.

The capacitance value receiving circuit channel can feed the capacitance value generated on the touch panel to the touch chip; and the driving signal sending circuit channel can carry the driving signal of the touch chip.

In a particular example, the first tip structure 103 may be obtained by etching if the signal transmission channel 101 is formed by etching; and the second tip structure 104 is obtained by etching if the ground channel 102 is formed by etching.

Since both the first tip structure 103 and the second tip structure 104 may be obtained by etching if the touch circuit for the touch panel is formed by etching, no other materials needs to be added additionally, which saves manufacturing cost.

In a particular example, for not affecting the normal work of the signal transmission channel 101, if the first tip structure 103 is formed by etching, on the premise that the effect of aggregating the static charges by the first tip structure 103 is ensured, the first tip structure 103 may be etched as small as possible.

In summary, in the touch circuit comprising a static protection structure provided by the embodiments of the present disclosure, the static charges are aggregated at the first tip structure at the end of the signal transmission channel, and the aggregated static charges are discharged to the second tip structure on the ground channel opposite to the first tip structure; in this way, the static charges are discharged to the ground channel to eliminate the damage of the static to the touch circuit, thereby solving the problem that adding a static protection device can only block the static charges, but still has a damage to the touch circuit when the aggregated static charges are too many, and achieving the effect of improving the anti-static performance of the touch circuit.

In addition, a distance between the needlepoint-shape top end on the first tip structure and the needlepoint-shape top end on the second tip structure is set to be smaller than a predetermined distance threshold, which solves the problem that the static charges cannot be discharged when the distance between the needlepoint-shape top end on the first tip structure and the needlepoint-shape top end on the second tip structure is too far, and achieves the effect of improving a discharging effect of the static charges in the touch circuit.

In addition, the first tip structure is obtained by etching if etching is used to form the signal transmission channel, and the second tip structure is obtained by etching if etching is used to form the ground channel, which solves the problem that the manufacturing cost of the touch circuit is relatively high due to adding the static protection device, and achieves the effect of decreasing the manufacturing cost of the touch circuit.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with the scope of the invention being indicated by the following claims.

## Claims

1. A touch circuit comprising a static protection structure, **characterized in that** the touch circuit comprises: a signal transmission channel (101) and a ground channel (102);
wherein an end of the signal transmission channel (101) is provided with a first tip structure (103) protruding outward and having a needlepoint-shape top end (1031);
wherein the ground channel (102) is provided with a second tip structure (104) having a needlepoint-shape top end (1041) which is opposite to the needlepoint-shape top end (1031) of the first tip structure (103); and
wherein the needlepoint-shape top end (1031) of the first tip structure (103) on the signal transmission channel (101) is used for aggregating static charges on the signal transmission channel (101), and discharging the aggregated static charges to the second tip structure (104) on the ground channel (102) opposite to the first tip structure (103).

2. The touch circuit of claim 1, **characterized in that** the needlepoint-shape top end (1041) on the second tip structure (104) is used for receiving the static charges discharged by the needlepoint-shape top end (1031) of the first tip structure (103), and guiding the static charges to the ground channel (102).

3. The touch circuit of claim 1 or 2, **characterized in that** a distance between the needlepoint-shape top end (1031) on the first tip structure (103) and the needlepoint-shape top end (1041) on the second tip structure (104) is smaller than a predetermined distance threshold.

4. The touch circuit of any one of claims 1 to 3, **characterized in that** the ground channel (102) is used for providing a turning loop for the static charges received by the second tip structure (104).

5. The touch circuit of any one of claims claim 1 to 4, **characterized in that** the signal transmission channel (101) is connected with a touch chip, and the signal transmission channel is used for receiving a capacitance value generated on a touch panel and carrying a driving signal of the touch chip.

6. The touch circuit of any one of claims 1 to 5, **characterized in that** the first tip structure (103) is obtained by etching if the signal transmission channel (101) is formed by etching; and
the second tip structure (104) is obtained by etching if the ground channel (102) is formed by etching.

7. A touch panel, **characterized in that** the touch panel comprises the touch circuit of any one of claims 1 to 6.
